# EUROPEAN PATENT SPECIFICATION

(11) **EP 2 341 294 B1**
(45) Date of publication and mention of the grant of the patent: **22.02.2017**
(21) Application number: 09180985.5
(22) Date of filing: 30.12.2009
(51) Int. Cl.: B60N 3/16, F24C 15/12, F24C 15/10, F24C 3/14

(54) **A hob for a recreational vehicle or a vessel**
Herd für ein Erholungsfahrzeug oder ein Schiff
Plaque de cuisson pour véhicule de loisirs ou vaisseau

(43) Date of publication of application: 06.07.2011
(73) Proprietor: Dometic Italy S.r.l., 47122 FORLÌ (FO) (IT)
(72) Inventor: Moresco, Paolo, 36061 Bassano del Grappa (VI) (IT)
(74) Representative: Conti, Marco

(56) References cited:
- ES-A1- 2 126 428
- FR-A1- 2 650 373
- GB-A- 867 237
- GB-A- 989 700
- GB-A- 1 382 514
- GB-A- 2 227 087
- GB-A- 2 297 612
- US-A- 1 841 219

## Description

The invention relates to a hob for a recreational vehicle or a vessel, comprising at least one gas burner, a pan support for supporting a pot or pan above the gas burner when cooking, and a cover for covering the gas burner, the cover being movable between an opened position and a closed position.

Such hobs are being widely used in a recreational vehicles and vessels, mainly for cooking food. As there is only limited space available in such vehicles, there have been numerous attempts to reduce the size of the hob and to integrate it with the adjacent furniture of the kitchen area. Furthermore, various ways have been proposed to stow away the hobs when they are out of use. None of the prior suggestions has been entirely satisfying.

An example of a caravan cooker is provided in GB 2 307 546 A. the caravan cooker comprises a hob, an upper heating chamber and a lower heating chamber, which are assembled together to enable installation of the cooker as a single unit, in/or adjacent a caravan worktop. The cover for the hob can be opened to enable cooking on the hob, and closed to define a worktop surface. The hob is fitted with four conventional gas burners and a wire trivet. GB 867,237, ES 2 126 428 A1 and FR 2 650 373 A1 disclose an example of a hob suitable for a recreational vehicle.

The problem of the present invention is to provide a hob for a recreational vehicle or a vessel that supports bigger pans and pots and can be reduced in size and stowed away simply by closing a cover.

A solution to this problem is provided by a hob for a recreational vehicle or a vessel with the features the claim. Preferred embodiments of the hob are described below.

The inventive hob comprises a cover that is configured to raise the pan support when the cover is moved from the closed position to the opened position; and to lower the pan support when the cover is moved from the opened position to the closed position.

One of the advantages of the inventive hob is that a raised pan support can support pans that have a larger diameter than the hob if the pan support is raised above a frame of the hob. Thus, the pans that are placed on the pan support may extend beyond the frame of the hob to the side. Furthermore, when the cover is closed, the pan support is lowered and hides neatly below the cover. Thus, an even working surface is provided by the cover, the cover being flush with the top of the adjacent furniture.

The pan support comprises at least one cross bar and at least one, preferably bent, support bar that is arranged on top of the cross bar. Furthermore, the support the may be arranged to fit between the gas burner and the cover in the closed position of the cover. This arrangement allows for optimal use of the available space inside the hob.

The cover may be pivotable about an axle. Thus, the cover may be easily moved between an opened position and a closed position.

The cover may be biased by at least one spring to remain in the opened position and/or the closed position. Since the recreational vehicle or a vessel may move while travelling, it is advantageous to keep the cover in one of its end positions. This benefits the security of the user.

The cover is connected to the pan support via an adjustment mechanism. The adjustment mechanism allows for the efficient raising and lowering of the pan support. The inventive solution does not require an electric motor or a hydraulic system to lift the pan support.

The weight of the pan support and any pan or pot that is placed on the pan support may bias the cover in the opened position via the adjustment mechanism. This arrangement assures that the weight of the pan support is converted into a force biasing the cover. Hence, there are no additional means required to maintain the cover in the opened position.

The adjustment mechanism comprises at least one angular member, a connector and at least one eccentric element for connecting the cover to the connector. The advantageous adjustment mechanism therefore comprises only a minimal number of parts. Thus, the weight of the hob and any maintenance requirements are reduced.

The angular member comprises two stays, wherein the pan support is connected to one stay and the connector is connected to the other stay. The pan support stay may be longer than the connector stay such that a smaller movement of the connector raises the pan support by a larger amount.

The adjustment mechanism comprises a first eccentric element for supporting the cover.

This allows for placing the cover next to the pivot axle.

The adjustment mechanism may comprise a second eccentric element for attaching the connector to the first eccentric element. By providing the second eccentric element, the connector may be actuated by a longer lever arm than the cover is capable of providing.

The second eccentric element may form-fit the first eccentric element. Thus, both eccentric elements may mate without requiring additional parts to keep them connected.

The hob may further comprise a frame. Advantageously, the angular member is pivotably connected to that frame and distanced therefrom by a sleeve. Thus, there is no need to provide additional support members for the angular member.

The gas burner may be separated from the angular member by a side wall. The side wall protects the angular member and mechanical elements attached thereto from dirt and spillage that may result from cooking on the hob.

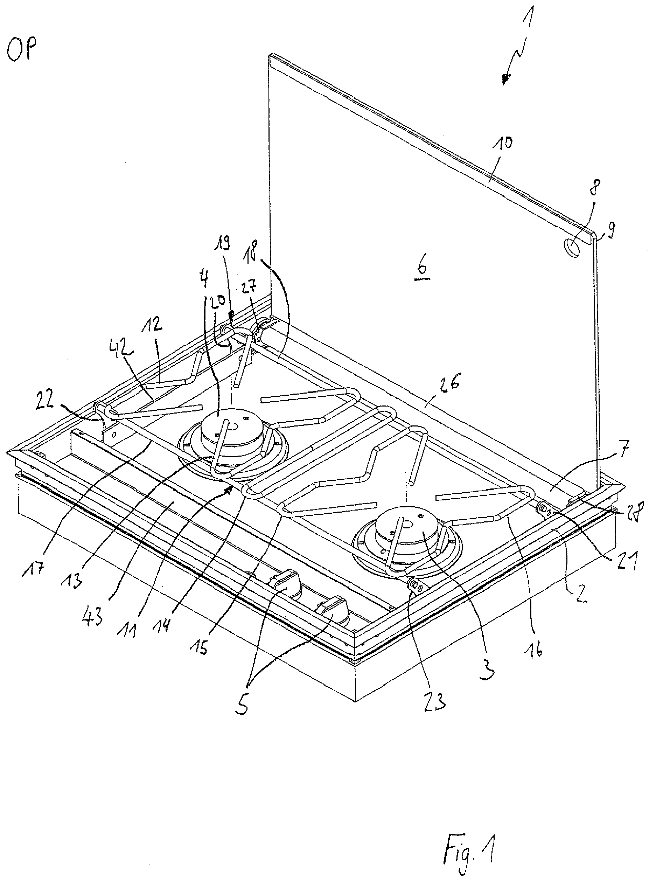

A preferred embodiment of the invention will now be described in detail with reference to the accompanying drawings, of which
- Fig. 1: is an isometric view of the hob;

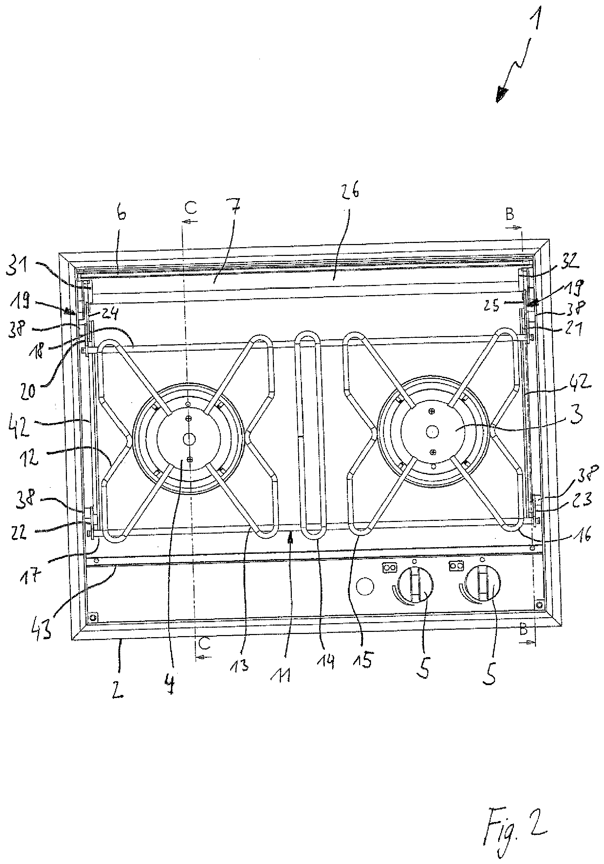

- Fig. 2: is a top view of the hob of Fig. 1; and

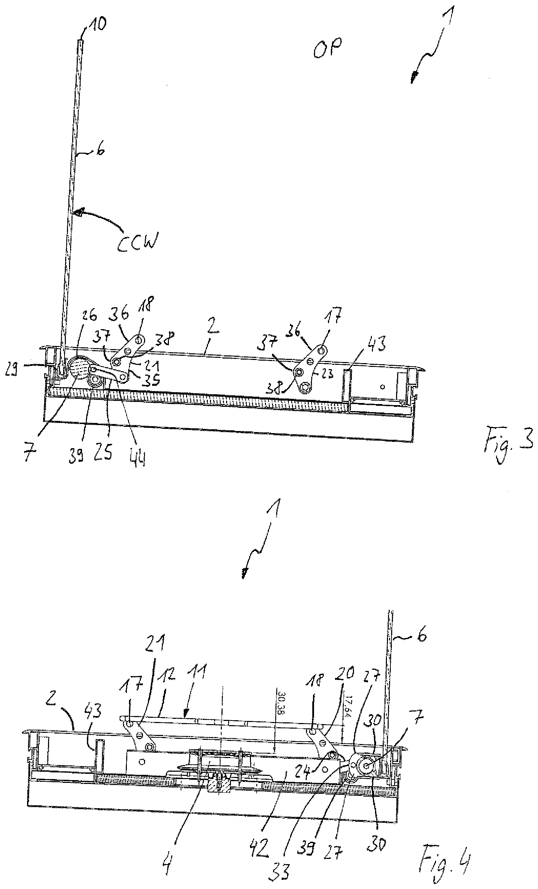

- Fig. 3: is a cross section along line B-B in Fig. 2; and
- Fig. 4: is a cross section along line C-C in Fig. 2.

The inventive hob 1 is of modular design and comprises a frame 2 that houses to two gas burners 3, 4 that can be controlled via two control knobs 5 placed in a front section of the hob 1. The frame 2 is covered by a cover 6 that is pivotable about a pivot axle 7. To pivot the cover 6, a user may push a finger or thumb through a hole 8 in the cover 6 near a distal end 9 of the cover 6. A U-shaped protector 10 is also provided at the distal end 9 of the cover 6. A pan support 11 is positioned above the gas burners 3, 4 in the opened position OP of the cover 6. The pan support 11 comprises five bent support bars 12-16 for supporting pans or pots, the support bars 12-16 being welded to two cross bars 17, 18 that are spaced apart from each other.

The pan support 11 can be raised and lowered according to the position of the cover 6 by an adjustment mechanism 19. The adjustment mechanism 19 is positioned on the sides of the pan support 11. The adjustment mechanism 19 comprises four angular members 20-23, two connectors 24, 25, a first eccentric element 26 and two second eccentric elements 27, 28. The cover 6 is connected to the pivot axle 7 via the first eccentric element 26. The cover 6 is press-fit to a stay 29 of that first eccentric element 26. The second eccentric elements 27, 28 are provided with ears 30 that form-fit around the first eccentric element 26 and are also pivotable around the pivot axle 7. The second eccentric elements 27, 28 are mounted near the ends 31, 32 of the pivot axle 7. At ends 33 of the second eccentric elements 27, 28, the bar-shaped connectors 24, 25 are mounted connecting each second eccentric element 27, 28 to a stay 35 of an adjacent angular member 20-23. The other stay 36 of the angular members 20-23 is pivotably connected to an end 37 of one of the cross bars 17, 18. To enable the pivoting motion of the angular members 20-23, the angular members 20-23 are pivotably mounted to the frame 2 at their center sections 37. Sleeves 38 are provided between the center sections 37 and the frame 2 to distance the angular members 20-23 from the frame 2.

Two springs 39 bias the first eccentric element 26 to keep the cover 6 in the opened position OP or the closed position (not shown). The springs 39 are arranged in parallel to the pivot axle 7. The springs 39 may be adjusted by screws 40 that are attached to an end 41 of each spring 39.

Furthermore, sidewalls 42 are provided between the gas burners 3, 4 and the angular members 20-23 to protect the angular members 20-23 from becoming dirty when cooking. Another sidewall 43 separates the control knobs 5 from the gas burners 3, 4.

Raising the cover 6 from the closed position to the opened position OP pivots the first eccentric element 26 and the second eccentric elements 27, 28 around the pivot axle 7.

Ends 44 of the connectors 24, 25 that are connected to the second eccentric elements 27, 28 are rotated counterclockwise CCW and thus rotate the attached angular members 20-23. The rotation of the angular members 20-23 raises the pan support 11 accordingly. In the opened position OP of the cover 6, the weight of the pan support and any pan or pot that is placed on the pan support 11 is transmitted via the adjustment mechanism 19 to the cover 6 such that the cover 6 is biased in the opened position OP.

The raised pan support 11 enables the user to place pans and pots on the hob that have a larger diameter than the frame 2. Thus, the frame 2 can have a smaller size than those known in the prior art. When closing the cover 6, the pan support 11 folds away neatly, such that the closed cover 6 provides a level surface and blends with the adjacent furniture. When the cover 6 is closed, the support bars 12-16 are kept between the gas burners 3, 4 and the cover 6.

### Reference Signs

- 1 -: hob
- 2 -: frame
- 3 -: gas burner
- 4 -: gas burner
- 5 -: control knob
- 6 -: cover
- 7 -: pivot axle
- 8 -: hole
- 9 -: end of 6
- 10 -: protector
- 11 -: pan support
- 12 -: support bar
- 13 -: support bar
- 14 -: support bar
- 15 -: support bar
- 16 -: support bar
- 17 -: cross bar
- 18 -: cross bar
- 19 -: adjustment mechanism
- 20 -: angular member
- 21 -: angular member
- 22 -: angular member
- 23 -: angular member
- 24 -: connector
- 25 -: connector
- 26 -: first eccentric element
- 27 -: second eccentric element
- 28 -: second eccentric element
- 29 -: stay
- 30 -: ear
- 31 -: end of 7
- 32 -: end of 7
- 33 -: end of 27, 28
- 35 -: connector stay
- 36 -: pan support stay
- 37 -: center section
- 38 -: sleeve
- 39 -: spring
- 40 -: screw
- 41 -: end of 40
- 42 -: sidewall
- 43 -: sidewall
- 44 -: end of 24, 25

- CCW -: counterclockwise
- OP -: opened position

## Claims

1. A hob for a recreational vehicle or a vessel, comprising at least one gas burner (3, 4), a pan support (11) for supporting a pot or pan above the gas burner (3, 4), and a cover (6) for covering the gas burner (3, 4), the cover (6) being movable between an opened position (OP) and a closed position,
wherein the cover (6) is configured to raise the pan support (11) when the cover (6) is moved from the closed position to the opened position (OP), and to lower the pan support (11) when the cover (6) is moved from the opened position (OP) to the closed position,
wherein the pan support (11) comprises at least one cross bar (17, 18) and at least one support bar (12 to 16) that is arranged on top of the cross bar (17, 18),
wherein the support bar (12 to 16) is arranged to fit between the gas burner (3, 4) and the cover (6) in the closed position of the cover (6),
wherein the cover (6) is connected to the pan support (11) via an adjustment mechanism (19),
wherein the adjustment mechanism (19) comprises at least one angular member (20 to 23), a connector (24, 25), **characterized in that** the adjustment mechanism (18) further comprises adjustment mechanism (19) eccentric element (26 to 28) for connecting the cover (6) to the connector (24, 25), wherein the angular member (20-23) comprises two stays (35, 36), wherein the pan support (11) is connected to one stay (36) and the connector (24, 25) is connected to the other stay (35), and wherein said other stay (36) of the angular member (20-23) is pivotably connected to an end of said cross bar (17, 18).

2. The hob according to claim 1, wherein the cover (6) is pivotable about an axle (7).

3. The hob according to one of claims 1 or 2, wherein the cover (6) is biased by at least one spring (39) to remain in the opened position (OP) and/ or the closed position.

4. The hob according to claim 1, wherein the weight of the pan support (11) and any pan or pot that is placed on the pan support (11) biases the cover (6) in the opened position (OP) via the adjustment mechanism (19).

5. The hob according to claim 1, wherein the adjustment mechanism (19) comprises a first eccentric element (26) for supporting the cover (6).

6. The hob according to claim 5, wherein the adjustment mechanism (19) comprises a second eccentric element (27, 28) for connecting the connector (24, 25) to the first eccentric element (26).

7. The hob according to claim 6, wherein the second eccentric element (27, 28) form-fits the first eccentric element (26).

8. The hob according to one of claims 1 to 7, wherein the hob further comprises a frame (2).

9. The hob according to claim 8, wherein the angular member (20-23) is pivotably connected to the frame (2) and distanced therefrom by a sleeve (38).

10. The hob according to one of claims 1 or 9, wherein the gas burner (3, 4) is separated from the angular member (20 to 23) by a side wall (42).

## Patentansprüche

1. Herd für ein Erholungsfahrzeug oder ein Schiff, umfassend mindestens einen Gasbrenner (3, 4), eine Topfauflage (11) für die Auflage eines Topfs oder einer Pfanne über dem Gasbrenner (3, 4) und eine Abdeckung (6) zum Abdecken des Gasbrenners (3, 4), wobei die Abdeckung (6) zwischen einer geöffneten Position (OP) und einer geschlossenen Position bewegbar ist,
wobei die Abdeckung (6) ausgelegt ist, um die Topfauflage (11) anzuheben, wenn die Abdeckung (6) von der geschlossenen Position in die geöffnete Position (OP) bewegt wird, und um die Topfauflage (11) zu senken, wenn die Abdeckung (6) von der geöffneten Position (OP) in die geschlossene Position bewegt wird, wobei die Topfauflage (11) mindestens eine Querstange (17, 18) und mindestens eine Haltestange (12 bis 16) umfasst, die auf der Oberseite der Querstange (17, 18) angeordnet ist,
wobei die Haltestange (12 bis 16) angeordnet ist, um zwischen dem Gasbrenner (3, 4) und der Abdeckung (6) in der geschlossenen Position der Abdeckung (6) eingepasst zu werden,
wobei die Abdeckung (6) mit der Topfauflage (11) mittels eines Einstellmechanismus (19) verbunden ist, wobei der Einstellmechanismus (19) mindestens ein Winkelelement (20 bis 23), einen Verbinder (24, 25) umfasst, **dadurch gekennzeichnet, dass** der Einstellmechanismus (18) zudem ein exzentrisches Element (26 bis 28) für den Einstellmechanismus (19) umfasst, um die Abdeckung (6) mit dem Verbinder (24, 25) zu verbinden, wobei das Winkelelement (20 bis 23) zwei Stützen (35, 36) umfasst, wobei die Topfauflage (11) mit einer Stütze (36) verbunden ist und der Verbinder (24, 25) mit der anderen Stütze (35) verbunden ist und wobei die andere Stütze (36) des Winkelelements (20 bis 23) schwenkbar mit einem Ende dieser Querstange (17, 18) verbunden ist.

2. Herd nach Anspruch 1, wobei die Abdeckung (6) um eine Achse (7) schwenkbar ist.

3. Herd nach einem der Ansprüche 1 oder 2, wobei die Abdeckung (6) von mindestens einer Feder (39) vorgespannt ist, um in der geöffneten Position (OP) und/oder der geschlossenen Position zu bleiben.

4. Herd nach Anspruch 1, wobei das Gewicht der Topfauflage (11) und eines jeden Topfs oder einer jeden Pfanne, der/die auf der Topfauflage (11) abgestellt wird, die Abdeckung (6) in der geöffneten Position (OP) über den Einstellmechanismus (19) vorspannt.

5. Herd nach Anspruch 1, wobei der Einstellmechanismus (19) ein erstes exzentrisches Element (26) zum Stützen der Abdeckung (6) umfasst.

6. Herd nach Anspruch 5, wobei der Einstellmechanismus (19) ein zweites exzentrisches Element (27, 28) umfasst, um den Verbinder (24, 25) mit dem ersten exzentrischen Element (26) zu verbinden.

7. Herd nach Anspruch 6, wobei das zweite exzentrische Element (27, 28) formschlüssig mit dem ersten exzentrischen Element (26) ist.

8. Herd nach einem der Ansprüche 1 bis 7, wobei der Herd zudem einen Rahmen (2) umfasst.

9. Herd nach Anspruch 8, wobei das Winkelelement (20 bis 23) schwenkbar mit dem Rahmen (2) verbunden und von diesem mittels einer Hülse (38) beabstandet ist.

10. Herd nach einem der Ansprüche 1 oder 9, wobei der Gasbrenner (3, 4) vom Winkelelement (20 bis 23) durch eine Seitenwand (42) getrennt ist.

## Revendications

1. Plaque de cuisson pour véhicule de loisirs ou vaisseau, comprenant au moins un brûleur à gaz (3, 4), une grille (11) servant à supporter une cocotte ou une casserole au-dessus du brûleur à gaz (3, 4), et un couvercle (6) servant à recouvrir le brûleur à gaz (3, 4), le couvercle (6) étant mobile entre une position d'ouverture (OP) et une position de fermeture,
dans laquelle le couvercle (6) est configuré pour relever la grille (11) lorsque le couvercle (6) est déplacé de la position de fermeture à la position d'ouverture (OP), et pour abaisser la grille (11) lorsque le couvercle (6) est déplacé de la position d'ouverture (OP) à la position de fermeture,
dans laquelle la grille (11) comprend au moins une barre transversale (17, 18) et au moins une barre de support (12 à 16) étant disposée au sommet de la barre transversale (17, 18),
dans laquelle la barre de support (12 à 16) est disposée pour s'adapter entre le brûleur à gaz (3, 4) et le couvercle (6) dans la position de fermeture du couvercle (6),
dans laquelle le couvercle (6) est relié à la grille (11) via un mécanisme de réglage (19),
dans laquelle le mécanisme de réglage (19) comprend au moins un organe angulaire (20 à 23), un connecteur (24, 25), **caractérisée en ce que** le mécanisme de réglage (18) comprend de plus un élément excentrique (26 à 28) de mécanisme de réglage (19) pour relier le couvercle (6) au connecteur (24, 25), dans laquelle l'organe angulaire (20-23) comprend deux arrêts (35, 36), dans laquelle la grille (11) est reliée à un arrêt (36) et le connecteur (24, 25) est relié à l'autre arrêt (35), et dans laquelle ledit autre arrêt (36) de l'organe angulaire (20-23) est relié de façon pivotante à une extrémité de ladite barre transversale (17, 18).

2. Plaque de cuisson selon la revendication 1, dans laquelle le couvercle (6) peut pivoter autour d'un axe (7).

3. Plaque de cuisson selon l'une des revendications 1 ou 2, dans laquelle le couvercle (6) est compensé par au moins un ressort (39) pour rester dans la position d'ouverture (OP) et/ou dans la position de fermeture.

4. Plaque de cuisson selon la revendication 1, dans laquelle le poids de la grille (11) et de toute casserole ou cocotte étant placée sur la grille (11) compense le couvercle (6) dans la position d'ouverture (OP) via le mécanisme de réglage (19).

5. Plaque de cuisson selon la revendication 1, dans laquelle le mécanisme de réglage (19) comprend un premier élément excentrique (26) pour supporter le couvercle (6).

6. Plaque de cuisson selon la revendication 5, dans laquelle le mécanisme de réglage (19) comprend un second élément excentrique (27, 28) pour relier le connecteur (24, 25) au premier élément excentrique (26).

7. Plaque de cuisson selon la revendication 6, dans laquelle la forme du second élément excentrique (27, 28) correspond au premier élément excentrique (26).

8. Plaque de cuisson selon l'une des revendications de 1 à 7, dans laquelle la plaque de cuisson comprend un châssis (2).

9. Plaque de cuisson selon la revendication 8, dans laquelle l'organe angulaire (20-23) est relié de façon pivotante au châssis (2) et éloigné de celui-ci par un manchon (38).

10. Plaque de cuisson selon l'une des revendications 1 ou 9, dans laquelle le brûleur à gaz (3, 4) est séparé de l'organe angulaire (20 à 23) par une paroi latérale (42).
